# EUROPEAN PATENT SPECIFICATION

(11) **EP 0 397 975 B1**
(45) Date of publication and mention of the grant of the patent: **06.09.1995**
(21) Application number: 90104488.3
(22) Date of filing: 09.03.1990
(51) Int. Cl.: H01G 7/02, H04R 19/04

(54) **Method of making a variable capacitor microphone**
Verfahren zur Herstellung eines variablen Kondensator- mikrophons
Procédé pour la fabrication d'un microphone à condenseur variable

(30) Priority: 19.05.1989 US 354893
(43) Date of publication of application: 22.11.1990
(73) Proprietor: GENTEX CORPORATION, Carbondale Pennsylvania 18407 (US)
(72) Inventor: Cote, Paul L., Windham, New Hampshire 030387 (US); Sallavanti, Robert A., Dalton, Pennsylvania 18414 (US)
(74) Representative: Hoeger, Stellrecht & Partner

(56) References cited:
- US-A- 4 281 072
- PROC. 5TH INTERNATIONAL SYMPOSIUM ON ELECTRETS 1985, HEIDELBERG, DE pages 678 -683; S CRESTANA ET AL: 'Electret production and dosimetry with alpha-particles.
- NUCLEAR TECHNOLOGY vol. 75, no. 2, November 1986, US pages 215 - 221; T. UDA ET AL.: 'Characteristics of a foil-type electret dosimeter for a surface alpha contamination monitor.'
- JAPANESE PATENTS REPORTS volume 88, no 42, Derwent Publications Ltd., London, GB; AN 88-296230
- JOURNAL OF PHYSICAL CHEMISTRY vol. 80, no. 12, 1976, EASTON US pages 1387 -1388; I.F. MILLER ET AL: 'Polyelectrolyte membrane electrets. Evidence for high degree of charge storage capacity.'
- PATENT ABSTRACTS OF JAPAN vol. 11, no. 59 (E-482) 24 February 1987

## Description

This invention relates to the making of a capacitor element suitable for use in a microphone or other transducer, said capacitor element comprising a rigid substrate and an electret supported thereon.

Capacitor microphones in which a permanently polarized dielectric, or electret, is used to obviate the need for an external high-voltage supply are well known in the art. Because of their small size, relative insensitivity to temperature or humidity changes, and extended high-frequency response, they are especially suited for use in citizen's-band transceivers, military communication systems and the like. One such electric microphone is shown in US-A-4 443 666.

In the microphone shown in the above-identified patent, an insulating substrate carries a metal electrode which in turn supports an electret. The electret comprises a fluorocarbon polymer such as the one sold by E. I. du Pont de Nemours and Company under the trademark TEFLON. A diaphragm comprising a metallized polyester such as the one sold unter the trademark MYLAR, disposed at a spacing from the electret, serves as a second electrode. Vibration of the second electrode in response to acoustic vibrations gives rise to a corresponding variation in the instantaneous displacement between the two electrodes, producing in turn a momentary variation in the potential difference between the two electrodes. This potential variation is applied to the gate of a field-effect transistor (FET) carried on the other side of the substrate, which in turn is coupled to an external amplification system.

In the fabrication process conventionally used, individual electrets of the desired shape are cut from a previously polarized sheet of TEFLON or other fluorocarbon polymer and bonded to the electrode carried by the substrate, following which the other elements of the electret microphone are assembled. It has been found that electrets made by this conventional process tend to discharge after a relatively short period of time, especially in moist environments. While the exact explanation of this premature discharge is not known, it is believed that the repeated handling of the electret following its initial formation is a contributing factor.

Another problem experienced with this conventional fabrication process is the tendency of the electret not to adhere to the electrode to which it is applied.

Still another problem experienced with the conventional fabrication process involves the polarization of the dielectric layer. One common method of polarizing the dielectric entails the use of a corona to ionize a gaseous region adjacent to the layer to generate charged particles. Although coronas generate the desired charged particles, they also undesirably generate ozone.

It is, however, already known (Proc. 5th Intern. Symp. Electrets, Heidelberg 1985, pages 678 - 683) to use alpha particles as ionizing radiation in forming an electret used in a dosimeter in which discharge of the electret by radiation permits quantitative measurement of the radiation.

### Summary of the Invention

It is an object of the present invention to provide a capacitor element comprising a rigid substrate and an electret supported thereon in which the electret maintains its polarization after a long period of time, even in moist environments.

When making a variable capacitor microphone, according to the present invention this object is achieved by the method specified in claim 1 or, when making a plurality of such microphones, by the method specified in claim 5.

Another advantage of the present invention is to provide an electret that satisfactorily adheres to a substrate to which it is applied.

Still another advantage of the present invention is to provide a method of making an electret that does not result in the generation of ozone.

Other and further advantages will be apparent from the following description.

Preferably, in the method of permanently polarizing a dielectric the dielectric is disposed adjacent to ionizable air.

When the gas is exposed to alpha radiation to generate charged particles of a given polarity therefrom, preferably negatively charged particles, the same are electrostatically deposited onto the dielectric while the dielectric is hot.

Preferably, the dielectric comprises a fluorocarbon - more particularly, a fluorinated ethylene-propylene copolymer such as the one sold under the trademark TEFLON. Preferably the alpha radiation source comprises polonium 210.

An apparatus for permanently polarizing a dielectric by the method described above preferably comprises a pair of electrodes, one of which preferably supports the dielectric and is heated, which electrodes define a region therebetween capable of containing an ionizable gas such as air, an alpha radiation source, means for applying a potential to the electrodes, and a heating source. Preferably, the alpha radiation source, which may comprise polonium 210 as noted above, is disposed relatively adjacent to the charging electrode and is shielded from the heating source.

We have found that by using an alpha source such as polonium 210 as an ion generator, we can effectively polarize dielectrics to form electrets. At the same time, by avoiding the use of a corona generator with its attendant high-intensity field, we avoid the undesirable result of generating ozone.

Preferably, a coating of a dielectric in a liquid solvent is applied to the surface of a conductive support. The liquid solvent is then removed from the applied coating to form a dielectric layer, which may be polarized to form an electret which is assembled with other components to make a microphone or other transducer. Preferably the dielectric comprises a fluorocarbon of the type noted above, while the solvent comprises water. The coating is preferably applied to a plurality of conductive supports carried by a single substrate, preferably by spraying through a mask. Preferably, a plurality of coatings are applied to the surface of the support, each coating being heated after formation to remove solvent therefrom.

We have found that by forming the dielectric layer in situ in this manner on the surface of the conductive support, we ensure satisvactory adhesion between the dielectric and the support. Further, since the dielectric layer is polarized only after it has been formed on the conductive support, subsequent handling of the dielectric, which may result in charge dissipation, is maintained.

Other advantageous features of embodiments of the present invention are specified in claims 4 and 6.

### Brief Description of the Drawings

In the accompanying drawings to which reference is made in the instant specification and which are to be read in conjunction therewith and in which like reference numerals are used to indicate like parts in the various views:

FIGURE 1 is a section along line 1-1 of FIGURE 2 of a microphone incorporating an electret constructed in accordance with our invention.

FIGURE 2 is a section of the electret microphone of FIGURE 1 along line 2-2 thereof.

FIGURE 3 is a top plan of the circuit board of the microphone shown in FIGURE 1 as it looks before the electret is formed thereon.

FIGURE 4 is a schematic diagram of the electret microphone of FIGURE 1 and the preamplifier circuit associated therewith.

FIGURE 5 is a top plan of the substrate from which the individual circuit boards are formed.

FIGURE 6 is an enlarged fragmentary top plan of the upper left portion of the substrate shown in FIGURE 5.

FIGURE 7 is a top plan of the mask used while spraying the dielectric onto the substrate shown in FIGURE 5.

FIGURE 8 is a section showing the spraying of the dielectric onto the surface of the substrate.

FIGURE 9 is a partly schematic side elevation of the apparatus used for permanently polarizing the dielectric formed by the spraying process as shown in FIGURE 8.

FIGURE 10 is a partly schematic fragmentary enlarged side elevation of the apparatus shown in FIGURE 9.

### Description Of the Preferred Embodiment

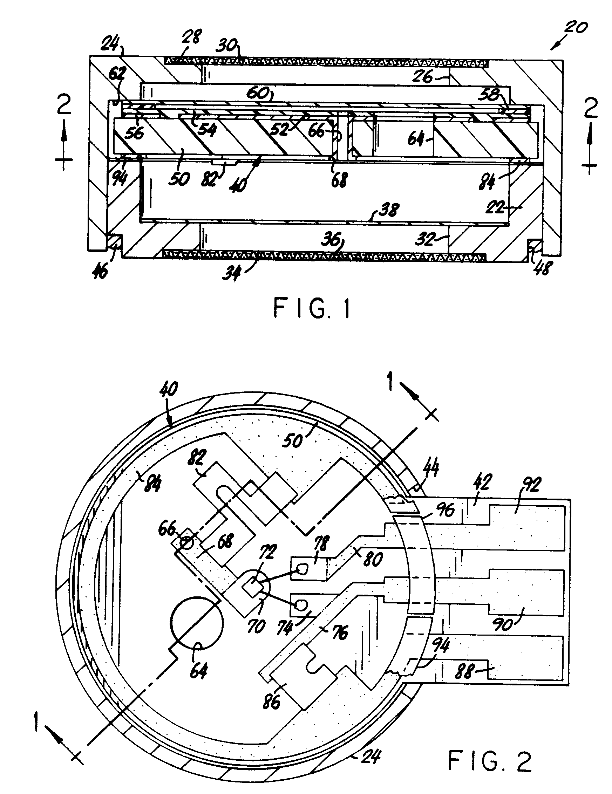

Referring to FIGURES 1 to 4, a microphone 20 incorporating an electret constructed in accordance with our invention includes a conductive base or lower housing portion 22 and a conductive cap or upper housing portion 24 which fits over the base 22 in intimate sliding contact therewith as shown in FIGURE 1 to form a conductive housing. Cap 24 is formed with a port 26 and with a larger-diameter recess 28 on the outer side of the port for receiving a wire screen 30. Likewise, base 22 is formed with a port 32 and with a larger-diameter recess 34 on the outer side of the port for receiving a wire screen 36. If desired, the inner side of port 32 may be fitted with an acoustically transparent shield 38 to protect the components to be described from moisture. A circuit board 40 includes a circular portion, supported by the upper rim of base 22 inside the housing, and a rectangular exposed portion or tab 42, which extends out of the housing through a slot 44 formed in the sidewall of cap 24. A nonconductive outer epoxy seal 46 extends along the lower edge of cap 24 and along the interface between tab 42 and base 22. Preferably, base 22 is formed with an indentation 48 around its lower periphery to accommodate the epoxy seal 46.

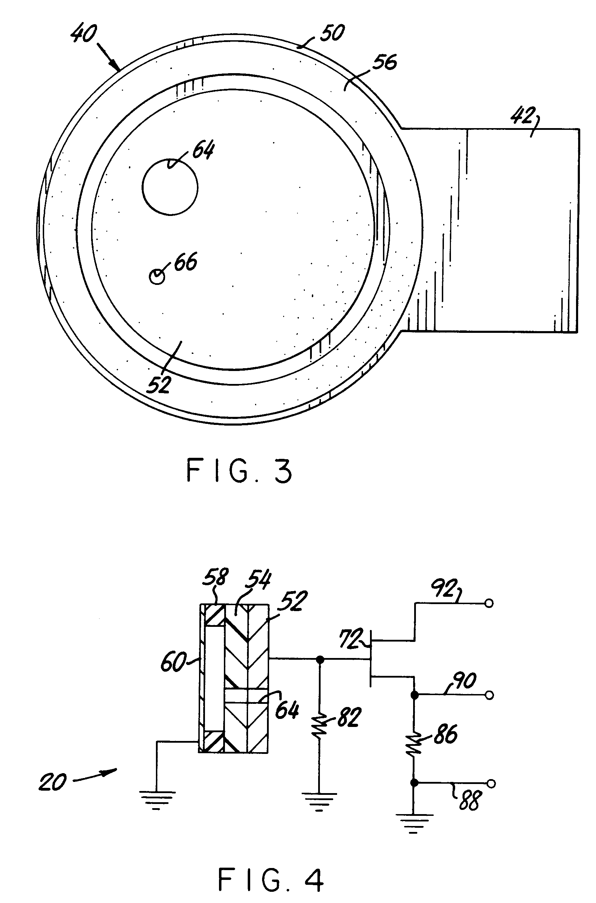

Circuit board 40, which supports the transducer and electronic elements of the microphone 20, is formed from an insulating ceramic support 50 having a circular palladium-silver electrode 52 formed on the upper surface of the en closed portion of the board, as shown in FIGURE 3. A permanently polarized disk-shaped electret 54 (not shown in FIGURE 3) is formed on the upper surface of the electrode 52 in accordance with our invention, as described below. A concentric palladium-silver support ring 56 surrounding electrode 52 on the upper surface of the board 40 supports the periphery of the electret 54. Electret 54 in turn supports an annular spacer 58, preferably comprising a polyester material such as the one sold under the trademark MYLAR. Spacer 58 in turn has bonded thereto a diaphragm 60 also comprising a polyester such as MYLAR and having a gold plating (not separately shown) on its upper surface as viewed in FIGURE 1. Electrode 52, electret 54, spacer 58 and diaphragm 60 together constitute the transducer portion of the microphone 20. An annual shoulder 62 formed on the inner surface of cap 24 presses the diaphragm 60 and spacer 58 against electret 54 and support ring 56 to sandwich the board 40 between the upper rim of base 22 and spacer 58.

Board 40 is formed with a first, relatively large-diameter bore 64 to form an acoustic coupling between the two sides of the board. In addition, board 40 is formed with a smaller-diameter bore 66, which is plated through with palladium-silver to provide an electrical coupling between electrode 52 and a palladium-silver plated area 68 on the lower side of board 40 adjoining a gold plated area 70. Plated area 70 is connected to the gate electrode of a field-effect transistor (FET) 72 carried on the lower surface of board 40. FET 72 has its source electrode coupled to a gold plated area 74 adjoining a palladium-silver plated area 76 and has its drain electrode coupled to a gold plated area 78 adjoining a palladium-silver plated area 80 also formed on the lower surface of board 40. A gate resistor 82 provides a conductive path between plated area 68 and a peripheral palladium-silver plated area 84 formed on the lower surface of board 40, while a source resistor 86 couples plated area 76 to the same peripheral area 84.

A first electrical terminal or contact 88 formed on the lower surface of tab 42 extends inwardly through slot 44 to join plated area 84. A second electrical terminal 90 formed on the lower surface of tab 42 extends through slot 44 to join plated area 76, while a third terminal 92 formed on the lower surface of tab 42 extends inwardly through slot 44 to join plated area 80. Preferably, terminals 88, 90 and 92 are formed of the same material as the plated areas that they join. A conductive epoxy layer 94 generally coextensive with annular plated area 84 couples area 84 electrically to base 22 and hence cap 24 to allow area 84 to serve as a ground or common line. Terminal 92 provides an external connection to the common plated area 84, while terminals 90 and 92 provide external connections to the source and drain, respectively, of FET 72, as shown in FIGURE 4. A nonconductive epoxy layer 96 separates the inwardly extending portions of terminals 90 and 92 from the upper rim of base 22 to preclude the possibility of a short circuit.

Suitable values for the mechanical dimensions, electrical parameters and the like will be apparent to those skilled in the art. Satisfactory results have been obtained with the following choices:
- Substrate (50) thickness: 0.020 inch
- Substrate (50) diameter: 0.285 inch
- Tab (42) width: 0.148 inch
- Tab (42) length: 0.125 inch
- Electrode (52) diameter: 0.200 inch
- Ring (56) ID: 0.225 inch
- Ring (56) OD: 0.275 inch
- Acoustic bore (64) diameter: 0.041 inch
- Electric bore (66) diameter: 0.010 inch
- Plating thickness: 0.0005 inch
- Diaphragm (60) thickness: 0.00025 inch
- Spacer (58) thickness: 0.002-0.003 inch
- Source resistor (86): 4.7-10 kΩ
- Gate resistor (82): 1000 MΩ
- FET (72): 2N4338
- Screen (30, 36) mesh size: 5 µm

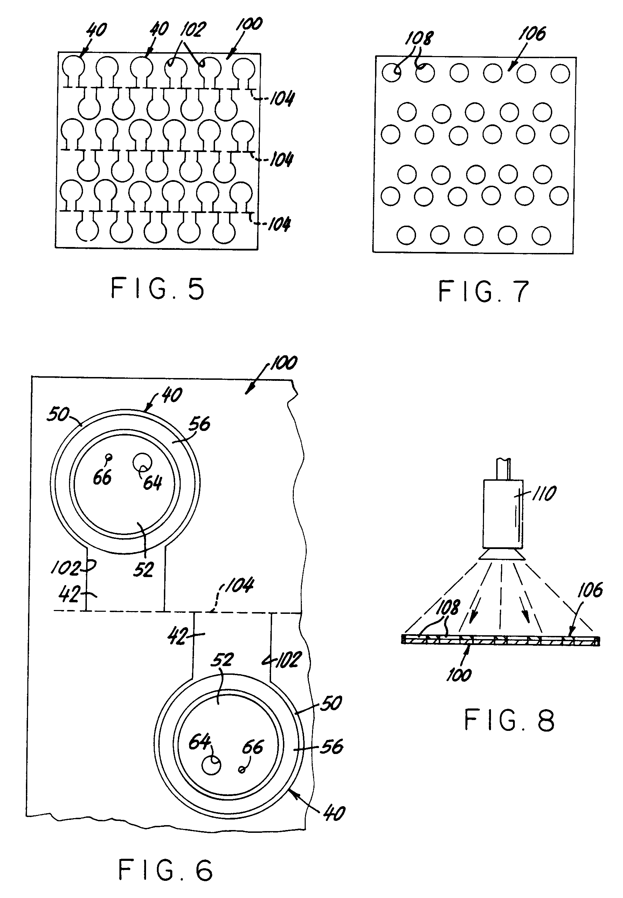

Referring now to FIGURES 5 and 6, a plurality of circuit boards 40 are formed from a single wafer 100, in which the circular portions of the boards and the sides of the tabs 42 are defined by laser cuts 102. The individual boards 40 are so arranged on the wafer 100 that the ends of the tabs 42 lie along lines 104 defined by scribes formed on the lower surface of the wafer 100. Typically, wafer 100 may be about 2.5 inches square and contain 33 individual boards 40.

To form circuit boards 40 containing electrets 54, a ceramic wafer 100 is first drilled to form the bores 64 and 66 of the individual boards, and formed with laser cuts 102 and scribe lines 104 to permit the individual boards 40 to be snapped away from the remainder of the wafer along the scribe lines. The upper and lower surfaces of the individual boards 40 on the wafer 100 are then plated with areas of palladium-silver and gold, as described above. After this plating step, gate resistor 82 and source resistor 86 are screened onto the lower surfaces of the boards, as shown in FIGURE 2.

Next, the TEFLON fluorocarbon dielectric is applied to the front surface of each of the individual circuit boards 40 by using an applicator 110 to spray the upper surface of the wafer 100 through a mask 106. As shown in FIGURES 7 and 8, mask 106, which rests on the surface of the wafer 100 during spraying, comprises a flat metal (e.g., brass) stencil formed with a plurality of apertures 108 concentric with and corresponding in diameter to the outside diameter of rings 56. Apertures 106 may be formed by any suitable process such as chemical etching. Preferably, DuPont 856-200 TEFLON FEP clear coating, an aqueous solution of FEP (fluorinated ethylene-propylene copolymer) having a viscosity of 25-300 centipoise (cP), is used. Preferably, no primer is used, and the solution not diluted. Before being applied, the material is preferably gently agitated at room temperature by rolling its container for 15 to 30 minutes, and then filtered through a 100 mesh stainless steel screen. Applicator 110 may comprise a standard compressed-air spray gun of the type used in painting. One suitable spray gun is a DeVilbiss Model MBC, operating at a pressure of 40 psi, with a #30 air cap with an F tip. The thickness of the applied dielectric layer 54 is controlled by the number of coatings. Preferably, no more than 1 mil of coating is formed per application.

After each coat of dielectric is applied in this manner to the front surface of wafer 100, it is thermally cured in accordance with the manufacturer's specifications to evaporate the solvent. Satisfactory results have been obtained with a total coating thickness of 1.5 mils, each coat being baked for 1 hour at 700°F. After the desired number of layers of dielectric have been applied in this manner, FETs 72 are applied to the lower surfaces of the individual boards 40, their leads bonded to gold-plated areas 70, 74 and 78, and the FETs potted over the epoxy (not shown). The individual boards are then separated from the wafer, as a preliminary to the charging step to be described below, by snapping them off at the ends of the tabs 42 along scribe lines 104.

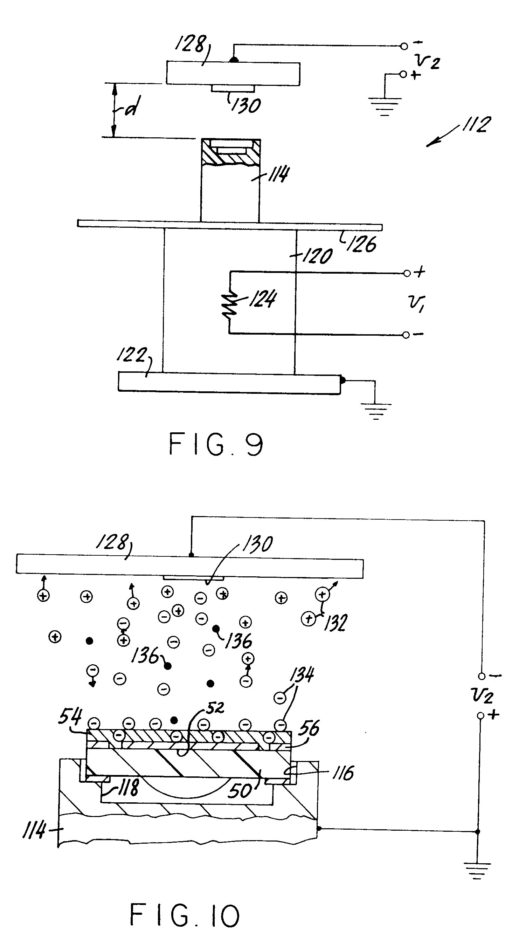

Referring now to FIGURES 9 and 10, the charging apparatus, indicated generally by the reference numeral 112, includes a conductive support 114, the upper surface of which is formed with a well 116 for receiving an individual circuit board 40 with the lower surface thereof face down. As shown in FIGURE 10, well 116 is formed with a further recess 118 to accommodate the electronic components on the lower surface of the board 40. Support 114 rests on a brass workstation 120, which in turn has a conductive base 122. A resistive element 124 disposed within workstation 120 is adapted to be coupled to a source of potential v₁ to heat the circuit board 40 to a suitable temperature during the charging process. A heat shield 126 disposed between support 114 and workstation 120 shields and electrode to be described from heat from the workstation 120.

Conductive support 114 not only supports circuit board 40, but serves as a first electrode, to which the electrode 52 supporting the electret 54 is coupled through the electronic components on the lower surface of the board. A charging electrode 128 disposed at a predetermined distance d from support 114 is adapted to be coupled to a source of highly negative potential v₂ to create a potential gradient in the region between electrode 128 and support 114. Preferably, electrode 128 comprises a metal (e.g., brass) disk supported by suitable means (not shown) for pivotal movement between an operative position (FIGURES 9 and 10) in register with workstation 120 and support 114, with a breach or gap of width d, and an inoperative position out of register with support 114. An ion generator 130 secured to the lower surface of electrode 128 ionizes the air in the region adjacent electrode 128, generating charged particles including positive ions 132, negative ions 134 and electrons 136. Preferably, ion generator 130 comprises an alpha emitter such as polonium 210, which is a short-range, short-life material.

Since, as described above, the electrode 128 is maintained at a highly negative potential relative to support 114, positive ions 132 formed in the gap are attracted to electrode 128, while negative ions 134 and electrons 136 are attracted toward the support 114 and hence dielectric layer 54. Those electrons and negative ions that reach the dielectric 54 without recombining with positive ions impinge upon the surface of the dielectric layer 54. Owing to thermal activity in the dielectric layer 54, those electrons and negative ions are absorbed onto or into the material, producing a layer of a negative charge (not separately shown) at or adjacent to the upper surface of the dielectric layer. That charge remains when the charging electrode 128 is removed and the dielectric layer 54 cooled.

In operation, an individual circuit board 40 on which a dielectric layer 54 has been formed is placed in the well 116 of support 114 and allowed to reach a suitable temperature. The electrode 128 and ion generator 130 are then swung into position opposite the support 114 at a spacing d therefrom. The dielectric layer 54 on board 40 is then charged for a predetermined time. The electrode 128 and ion generator 130 are then removed and the board 40 quickly cooled. To verify the charge level the board 40 is placed under an electrostatic voltmeter (not shown). If the measured voltage is acceptable, the board 40 is used to assemble a microphone as shown in FIGURES 1 to 4.

The gap width d controls the rate and thus amount of charge on the surface of layer 54 for a given time, temperature and charging voltage v₂. Suitable choices for the charging voltage v₂, temperature, time and gap width d will be apparent to those skilled in the art. Satisfactory results have been obtained using a voltage v₂ of -3000 volts, a time of 20 seconds, a temperature of 175°C and a gap width d of 0.5 inch.

Certain variations of the process described above will be apparent to those skilled in the art. Thus, while heating the dielectric during the charging step is desirable, it is not essential. Further, while the use of a mask is desirable to prevent the deposition of dielectric onto the tabs 42 of the circuit boards, such a step is likewise not essential.

It will be seen that we have accomplished the objects of our invention. Our electret maintains its polarization after a long period of time, even in moist environments, and satisfactorily adheres to a substrate to which it is applied. Further, the disclosed process for making an electret does not result in the generation of ozone.

## Claims

1. A method of making a variable capacitor microphone (20) having a fixed capacitor element (50, 52, 54) comprising a rigid insulating substrate (50) with a metalized surface (52) and an electret (54) supported thereon, and a diaphragm (60) disposed at a spacing from the electret, characterized by the following steps:
- forming the fixed capacitor element (50, 52, 54) by successively coating the metalized surface (52) of said substrate (50) with a polarizable dielectric material (54);
- placing the substrate (50) on one (114) of a pair of spaced electrodes (114, 128) positioned in an ionizable gas;
- heating said dielectric material (54);
- subjecting said gas to the action of alpha rays to produce ions in the space between said electrodes (114, 128);
- applying a potential (V₂) across the electrodes (114, 128) to cause ions (134) to migrate toward said dielectric material (54) to polarize the same to form the electret thereof;
- permitting said dielectric material (54) to cool, and
- mounting said insulating substrate (50) carrying said electret (54) in spaced relationship to the flexible diaphragm (60) to form said microphone.

2. A method according to claim 1, characterized in that said coating step comprises applying to said metalized surface (52) fluorinated ethylene-propylene copolymer in a solvent.

3. A method according to claim 2, characterized in that said solvent is water.

4. A method according to claim 3, characterized by applying an active circuit element (72) to said substrate (50) following the application of said coating (54).

5. A method of forming a plurality of variable capacitor microphones (20) each having a fixed capacitor element (50, 52, 54) comprising a rigid insulating substrate (50) with a metalized surface (52) and an electret (54) supported thereon, and a diaphragm (60) disposed at a spacing from the electret, including the steps of
- dividing a wafer (100) of relatively rigid insulating material into a plurality of separable circuit boards (40);
- simultaneously forming a film (52) of conductive material on said circuit boards (40);
- simultaneously coating areas of said film (52) of conductive material with a polarizable dielectric (54);
- separating said circuit boards;
- individually placing said circuit boards (40) on one of a pair of spaced electrodes (114, 128) positioned in an ionizable gas;
- heating said polarizable dielectric (54);
- subjecting said gas to the action of alpha rays to produce ions (134) in the space between said electrodes;
- applying a potential (V₂) across said electrodes (114, 128) to cause ions (134) to migrate toward said dielectric material (54) to polarize the same to form the fixed electret capacitor elements thereof;
- permitting the polarized dielectric material (54) to cool, and
- mounting said fixed electret capacitor elements (50, 52, 54) in spaced relationship to the respective flexible diaphragm (60) to form said variable capacitor microphones (20).

6. A method according to claim 5 characterized in that the coating step comprises applying said dielectric to said areas through a mask (106) to leave uncoated regions of said film on said circuit boards.

## Patentansprüche

1. Verfahren zur Herstellung eines variablen Kondensatormikrophones (20) mit einem festen Kondensatorelement (50, 52, 54), welches ein steifes isolierendes Substrat (50) mit einer metallisierten Oberfläche (52) sowie ein hierauf abgestütztes Elektret (54) umfaßt, und mit einer Membran (60), die im Abstand vom Elektret angeordnet ist, gekennzeichnet durch die folgenden Schritte:
- Bildung des festen Kondensatorelementes (50, 52, 54) durch aufeinanderfolgendes Beschichten der metallisierten Oberfläche (52) des Substrats (50) mit einem polarisierbaren dielektrischen Material (54);
- Anordnen des Substrats (50) auf einer Elektrode (114) eines Paares von im Abstand voneinander , angeordneten Elektroden (114, 128), welche in einem ionisierbaren Gas angeordnet sind;
- Erwärmen dieses dielektrischen Materials (54);
- das Gas wird der Wirkung von Alphastrahlen ausgesetzt, um in dem Zwischenraum zwischen den Elektroden (114, 128) Ionen zu erzeugen;
- Anlegen eines Potentials (V₂) über die Elektroden (114, 128), um Ionen (134) zu veranlassen, in Richtung auf das dielektrische Material (54) zu wandern, um dieses zu polarisieren und aus diesem das Elektret zu bilden;
- man läßt das dielektrische Material (54) abkühlen, und
- Anbringung des isolierenden Substrats (50), welches das Elektret (54) trägt, in einem Abstand von der flexiblen Membran (60), um das Mikrophon zu bilden.

2. Verfahren nach Anspruch 1, dadurch gekennzeichnet, daß der Schritt des Beschichtens das Aufbringen eines fluorierten Äthylen-Propylen-Copolymers in einem Lösungsmittel auf die metallisierte Oberfläche (52) umfaßt.

3. Verfahren nach Anspruch 2, dadurch gekennzeichnet, daß das Lösungsmittel Wasser ist.

4. Verfahren nach Anspruch 3, dadurch gekennzeichnet, daß nach dem Aufbringen der Beschichtung (54) ein aktives Schaltelement (72) auf das Substrat (50) aufgebracht wird.

5. Verfahren zur Herstellung mehrerer variabler Kondensatormikrophone (20), deren jedes ein festes Kondensatorelement (50, 52, 54), das ein steifes isolierendes Substrat (50) mit einer metallisierten Oberfläche (52) sowie ein hierauf abgestütztes Elektret (54) umfapt, und eine Membran (60) besitzt, welche im Abstand vom Elektret angeordnet ist, mit folgenden Schritten:
- Unterteilen eines Wafers (100) aus verhältnismäßig steifem, isolierendem Material in mehrere, voneinander trennbare Schaltkreisplättchen (40);
- gleichzeitige Bildung eines Films (52) aus leitendem Material auf den Schaltkreisplättchen (40);
- gleichzeitiges Beschichten von Bereichen dieses Films (52) aus leitendem Material mit einem polarisierbaren Dielektrikum (54);
- Trennen der Schaltkreisplättchen voneinander;
- Anordnen der einzelnen Schaltkreisplättchen (40) auf einer Elektrode eines Elektrodenpaares (114, 128), welches in einem ionisierbaren Gas angeordnet ist;
- Erwärmen des polarisierbaren Dielektrikums (54);
- das Gas wird der Wirkung von Alphastrahlen ausgesetzt, um in einem Zwischenraum zwischen diesen Elektroden Ionen (134) zu erzeugen;
- Anlegen eines Potentials (V₂) über die Elektroden (114, 128), um die Ionen zu veranlassen, in Richtung auf das dielektrische Material (54) zu wandern, um dieses zu polarisieren und aus diesem die festen Elektret-Kondensatorelemente zu bilden;
- man läßt das dielektrische Material (54) abkühlen, und
- Anbringung der festen Elektret-Kondensatorelemente (50, 52, 54) in einem Abstand von der entsprechenden flexiblen Membran (60), um die variablen Kondensatormikrophone (20) zu bilden.

6. Verfahren nach Anspruch 5, dadurch gekennzeichnet, daß der Schritt des Beschichtens das Aufbringen des Dielektrikums auf die genannten Bereiche durch eine Maske (106) hindurch umfaßt, damit auf den Schaltkreisplättchen unbeschichtete Filmbereiche verbleiben.

## Revendications

1. Procédé de fabrication d'un microphone (20) à condensateur variable ayant un élément (50, 52, 54) condensateur fixe comprenant un substrat (50) isolant rigide avec une surface (52) métallisée et un électret (54) s'appuyant dessus et un diaphragme (60) disposé à une distance de l'électret, caractérisé par les étapes suivantes:
- former l'élément (50, 52, 54) condensateur fixe en revêtant successivement la surface (52) métallisée dudit substrat (50) avec une matière (54) diélectrique polarisable;
- placer le substrat (50) sur une électrode (114) faisant partie d'une paire d'électrode (114, 128) écartées, positionnées dans un gaz ionisable;
- chauffer ladite matière (54) diélectrique;
- soumettre ledit gaz à l'action de rayons alpha pour produire des ions dans l'espace entre lesdites électrodes (114, 128);
- appliquer une tension (V₂) entre les électrodes (114, 128) pour amener les ions (134) à migrer vers ladite matière diélectrique (54) pour polariser celle-ci afin d'en former l'électret;
- permettre à ladite matière (54) diélectrique de refroidir, et
- monter ledit substrat (50) isolant portant ledit électret (54) dans une disposition écartée par rapport au diaphragme (60) flexible pour former ledit microphone.

2. Procédé selon la revendication 1, caractérisé en ce que ladite étape de revêtement comprend l'application sur ladite surface (52) métallisée d'un copolymère d'éthylène-propylène fluoruré dans un solvant.

3. Procédé selon la revendication 2, caractérisé en ce que ledit solvant est de l'eau.

4. Procédé selon la revendication 3, caractérisé par l'application d'un élément (72) de circuit actif sur ledit substrat (50) à la suite de l'application dudit revêtement (54).

5. Procédé de fabrication de plusieurs microphones (20) à condensateur variable ayant chacun un élément (50, 52, 54) condensateur fixe comprenant un substrat (50) isolant rigide avec une surface (52) métallisée et un électret (54) s'appuyant dessus et un diaphragme (60) disposé à une distance de l'électret, comprenant les étapes consistant à
- diviser un disque (100) en matière isolante relativement rigide en plusieurs plaquettes (40) séparables de circuits imprimés;
- former simultanément un film (52) de matière conductrice sur lesdites plaquettes (40) de circuits imprimés;
- revêtir simultanément des zones dudit film (52) de matière conductrice avec un diélectrique (54) polarisable;
- séparer lesdites plaquettes de circuits imprimés;
- placer individuellement lesdites plaquettes (40) de circuits imprimés sur une électrode faisant partie d'une paire d'électrodes (114, 128) écartées, positionnées dans un gaz ionisable;
- chauffer ladite matière (54) diélectrique;
- soumettre ledit gaz à l'action de rayons alpha pour produire des ions (134) dans l'espace entre lesdites électrodes;
- appliquer un potentiel (V₂) à travers les électrodes (114, 128) pour amener les ions (134) à migrer vers ladite matière diélectrique (54) pour polariser celle-ci afin d'en former les éléments du condensateur fixe à électret;
- permettre à ladite matière (54) diélectrique de refroidir, et
- monter ledits éléments (50, 52, 54) du condensateur fixe à électret dans une disposition écartée par rapport au diaphragme (60) flexible respectif pour former lesdits microphones (20) à condensateur variable.

6. Procédé selon la revendication 5, caractérisé en ce que l'étape de revêtement comprend l'application dudit diélectrique auxdites zones à travers un masque (106) pour laisser non revêtues des régions dudit film sur lesdites plaquettes de circuits imprimés.
